# EUROPEAN PATENT APPLICATION

(11) **EP 2 296 031 A1**
(43) Date of publication of application: **16.03.2011**
(21) Application number: 09170108.6
(22) Date of filing: 11.09.2009
(51) Int. Cl.: G02B 27/58

(54) **Detecting electromagnetic radiation**

(71) Applicant: Astrium Limited, Stevenage, Hertfordshire SG1 2AS (GB)
(72) Inventor: The designation of the inventor has not yet been filed
(74) Representative: Walaski, Jan Filip

(57) **Abstract**

According to the present invention, there is provided an apparatus comprising a sensor for detecting electromagnetic radiation from an object, focussing means arranged to focus said electromagnetic radiation onto the sensor, and a configurable element disposed between the focussing means and the sensor. The configurable element is switchable between a plurality of configurations, each configuration providing a different transfer function between the object and the sensor. As the configurable element is located between the focussing means and the sensor, the transfer function associated with each configuration contains information from both the Fourier and image domains, allowing a high resolution image to be reconstructed.

## Description

### Field of the Invention

The present invention relates to detecting electromagnetic radiation, and more particularly but not exclusively, to an apparatus which uses a configurable member to enable reconstruction of an image with a resolution greater than that of the configurable member itself.

### Background

Digital imaging devices function by focussing light from an object so as to form an image on a sensor comprising an array of pixels. As sensors in modern cameras typically have many millions of sensors, much of the pixel information is discarded immediately after capture in order to reduce the file size for storage, for example by compressing according to the JPEG compression scheme. The capture process is therefore inherently inefficient, as a large volume of pixel data is initially recorded only to be subsequently discarded before the image file is stored.

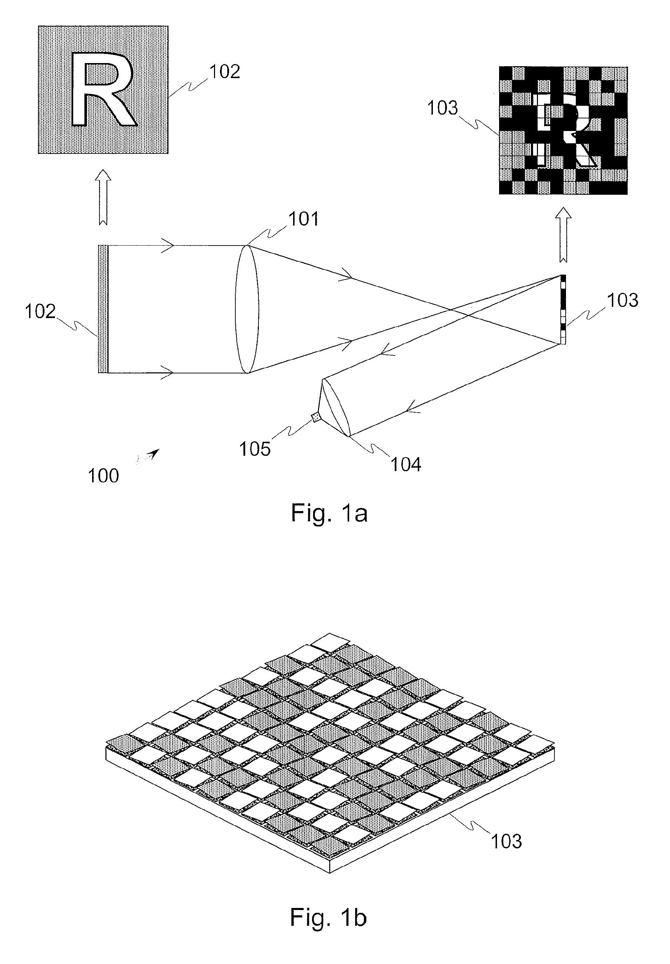

In recent years, single pixel cameras have been demonstrated which employ compressive sensing (CS) techniques to provide a more efficient capture process. Figure 1a schematically illustrates a prior art single pixel camera 100, which uses a first lens 101 to project an image of an object 102 onto a digital micromirror device (DMD) 103. The DMD 103 comprises an array of mirrors (see Fig. 1b), each one of which can be independently positioned at an angle of +12° or -12°. Light reflected by mirrors in one of the positions (e.g. +12°) is focussed onto a single photodiode 105 by a second lens 104.

The photodiode 105 therefore measures an overall intensity of light for the portion of the image which is reflected towards the second lens 104 by the DMD 103. An image can be reconstructed by analysing many measurements taken with the mirrors of the DMD set to different random configurations, provided the configurations used are known. The skilled person will be familiar with various algorithms which are suitable for reconstructing an image in this way, for example: orthogonal matching pursuit; matching pursuit; tree matching pursuit; L1 norm minimisation; or total variation minimisation.

However, the resolution of the reconstructed image is restricted to the resolution of the DMD, as each pixel of the reconstructed image corresponds to a single mirror of the DMD. For example, if the DMD comprises an array of 64×64 mirrors, the reconstructed image is limited to a resolution of 64×64 pixels.

### Summary of the Invention

The present invention aims to address the drawbacks inherent in known arrangements.

According to the present invention, there is provided an apparatus according to claim 1, an apparatus according to claim 12, and a method of detecting electromagnetic radiation according to claim 15.

According to the present invention, there is provided an apparatus comprising a sensor for detecting electromagnetic radiation from an object, focussing means arranged to focus said electromagnetic radiation onto the sensor, and a configurable element disposed between the focussing means and the sensor, the configurable element being switchable between a plurality of configurations, each configuration providing a different transfer function between the object and the sensor.

As the configurable element is disposed between the focussing means and the sensor, the configurable element is located away from the focal plane of the focussing means. The transfer function associated with each configuration therefore contains information from both the Fourier and image domains, allowing reconstruction of an image with a higher resolution than that of the configurable element itself.

The sensor may comprise a plurality of pixels.

The apparatus may further comprise a pixel readout system arranged to record a plurality of pixel values by controlling the configurable element to switch between said plurality of configurations and reading pixel values from the sensor for each one of said plurality of configurations.

The apparatus may further comprise a control system connected to the pixel readout system and the configurable element, wherein the pixel readout system may be arranged to use the control system to control the configurable element.

The apparatus may further comprise a transmitter for transmitting the plurality of pixel values recorded by the pixel readout system to a remote image reconstruction unit.

The remote image reconstruction unit may be arranged to reconstruct an image of the object by analysing the plurality of pixel values in conjunction with information about the plurality of configurations of the configurable element.

The configurable element may comprise a plurality of sub-elements, each sub-element being switchable between a first state in which incident electromagnetic radiation is transmitted to the sensor and a second state in which incident electromagnetic radiation is blocked from entering the sensor, wherein switching the configurable element between different configurations comprises switching selected ones of the sub-elements between the first state and the second state.

The configurable element may comprise one of a liquid crystal dot matrix array, a digital micromirror device, or an LCD reflector.

The focussing means may comprise one of a convergent lens or a concave mirror.

The electromagnetic radiation may have a wavelength corresponding to one of visible, x-ray, gamma-ray, UV, infra-red or radio wavelengths.

According to the present invention, there is further provided apparatus comprising a sensor comprising a phased array of detectors for detecting incident electromagnetic radiation from an object, and a configurable element arranged to be switchable between a plurality of configurations, each configuration providing a different transfer function between the object and the sensor.

The sensor may be arranged to detect said electromagnetic radiation in the Fourier domain.

The electromagnetic radiation may comprise radio-frequency electromagnetic radiation, the sensor may comprise a phased array of antennas, and the configurable element may comprise an array of independently switchable antenna reflectors.

According to the present invention, there is provided a method of detecting electromagnetic radiation from an object, the method comprising switching a configurable element between a plurality of configurations so as to provide a plurality of different transfer functions between the object and a sensor, each different transfer function comprising information about Fourier and image components of said electromagnetic radiation, the configurable element being disposed between the object and the sensor, and detecting said electromagnetic radiation at the sensor.

### Brief Description of the Drawings

Embodiments of the invention will now be described, by way of example, with reference to the accompanying drawings, in which:
Figure 1a illustrate a single pixel camera according to the prior art;
Figure 1b illustrates a digital micromirror device for use in the camera illustrated in Fig. 1a;
Figure 2 illustrates an image capture system according to some embodiments of the present invention;
Figure 3 illustrates a perspective view of the image capture system shown in Fig. 2;
Figure 4 schematically illustrates a transfer function associated with a particular configuration of the configurable element, according to some embodiments of the present invention;
Figures 5a and 5b schematically illustrate how different configurations of a configurable optical element may differently effect the transmittance of light from two closely adjacent points, according to some embodiments of the present invention;
Figure 6 illustrates an image capture system employing a reflective configurable optical element, according to some embodiments of the present invention; and
Figure 7 illustrates an image capture system comprising a phased array detector, according to some embodiments of the present invention.

### Detailed Description

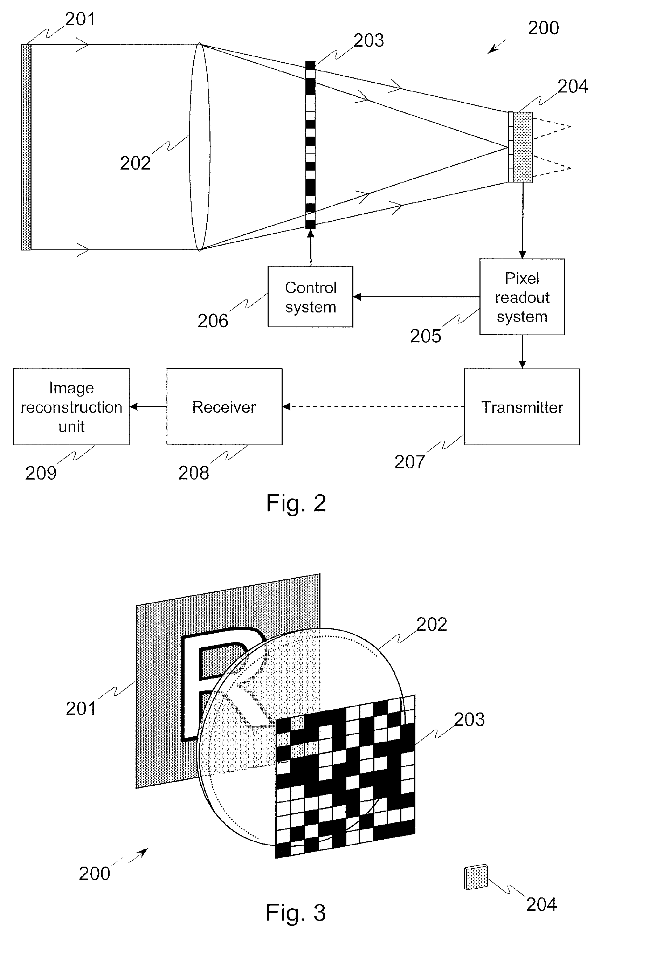

Referring now to Fig. 2, an image capture system is illustrated according to the present invention. The system comprises a convergent lens 202 which is arranged to focus light from an object 201 onto a sensor 204. The term "object" is used here to refer to the entire field of view from which light is captured and detected, and of which an image is reconstructed. The skilled person will appreciate that the "object" may in practice comprise a single physical entity or a plurality of such entities, or may simply comprise a field of background radiation which is being imaged. Furthermore, the detected light may be generated by the object, or may be generated by another source and reflected or transmitted (and/or partially absorbed) by the object.

In the present example, the sensor comprises a photodiode array 204 having a plurality of pixels. The system further comprises a configurable optical element 203, disposed between the convergent lens 202 and the photodiode array 204. The configurable optical element 203 comprises a plurality of sub-elements, each one of which can be individually switched between transparent and opaque modes according to a control signal received from a control system 206. In the present example, the configurable optical element 203 comprises a liquid crystal dot matrix array, but the skilled person will appreciate that other alternatives may be substituted (e.g. a MEMs shutter array).

In order to capture an image, a pixel readout system 205 records a set of pixel values from the photodiode array 204, with the configurable optical element 203 set to a known pseudo-random configuration. The pixel readout system 205 then instructs the control system 206 to switch the configurable optical element 203 to a different, known, pseudo-random configuration, and records a further set of pixel values. This process is repeated for a number of different configurations of the configurable optical element 203, thereby generating pixel data comprising the pixel values recorded for each configuration. This pixel data is sent via a transmitter 207 to a receiver 208, for analysis by an image reconstruction unit 209.

Each configuration of the configurable optical element 203 provides a unique transfer function between the object 201 and the image plane. The image reconstruction unit 209 has access to information defining the different configurations of the configurable optical element 203 used during capture of the pixel data, and is therefore able to calculate the transfer function for each configuration. The image reconstruction unit 209 is therefore able to calculate a form of the object which accounts for all recorded sets of pixel values when imaged with the configurable optical element 203 set to the corresponding configurations.

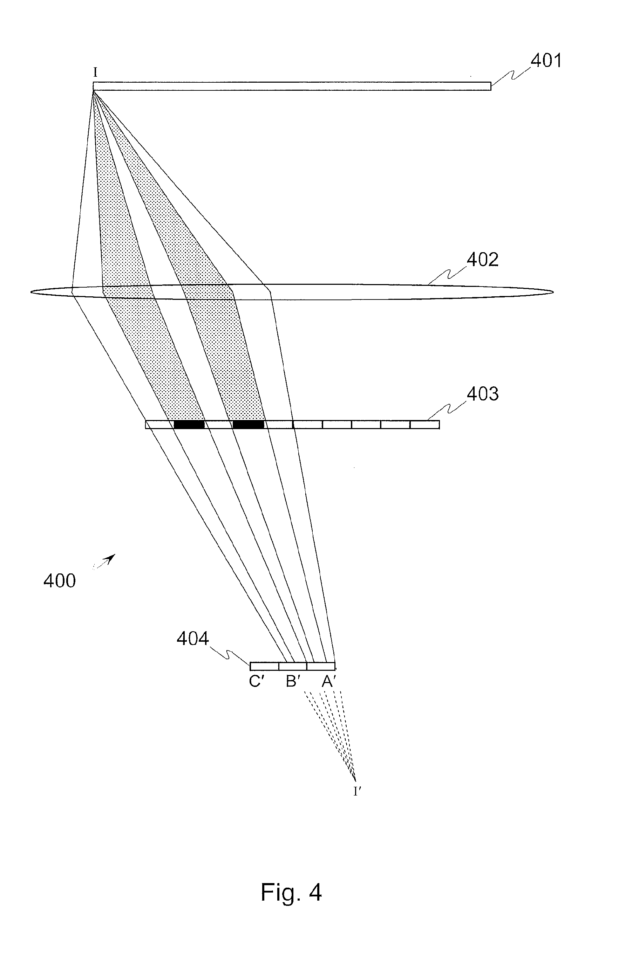

Furthermore, as the configurable optical element is situated away from the focal plane of the focussing means, the transfer function associated with each configuration of the configurable optical element contains information from both the Fourier and image domains. This is in contrast to the prior art camera (cf. Fig. 1), in which the transfer function associated with each configuration of the DMD contains only information from the image domain. A consequence of positioning the configurable optical element away from the focal plane is that an image can be reconstructed with a higher resolution than that of the configurable optical element itself, as will now be explained with reference to Fig. 4.

Figure 4 schematically illustrates an image capture system 400 according to the present invention, with a configurable optical element 403 set to a particular configuration. As with the example illustrated in Figs. 2 and 3, light from an object 401 is focussed by a lens 402 onto a sensor 404. As illustrated in Fig. 4, light originating from a first point I on the object 401 is focussed onto a corresponding point I' on the image plane, and is detected by first and second pixels A', B' of the sensor 404. Specifically, as clearly shown in Fig. 4, each pixel of the sensor 404 detects a given Fourier component of light from the object 401, i.e. each pixel detects light having a given range of incident angles.

Furthermore, the signal detected by each pixel will be modulated according to the configuration of the configurable element 403. In the present example, as two sub-elements of the configurable optical element 403 are switched to the opaque state, specific Fourier components of the light from the first point I are blocked from reaching the first pixel A' and the second pixel B' (cf. shaded portion). The skilled person will appreciate that for light emitted from a different point on the object 403, different Fourier components (i.e. different spatial frequencies) of said light will be blocked from reaching the sensor 404. This is true even when the two points are spaced closely together.

In order to reconstruct an image of a certain resolution, it is necessary to be able to distinguish points on the object which are separated by a certain minimum distance. When the configurable optical element is positioned at the image plane, as in the prior art, it is not possible to resolve points lying within a single pixel of the configurable optical element (i.e. a single mirror of the DMD in Fig. 1). This is because when any given pixel is turned on, the change in signal recorded by the sensor contains information about all points within that pixel. Similarly, when the pixel is turned off, the sensor records no information about any points within the pixel. It is therefore not possible to differentiate between individual points within a pixel, since all points within a pixel are affected in the same way when the configuration of the DMD changes. The resolution of the reconstructed image is therefore limited to the resolution of the DMD.

In contrast, in the present invention, the transfer function associated with a particular configuration contains information from both the Fourier and image domains, i.e. each configuration differently modulates a Fourier component of the incident light. Therefore, a change in configuration of the configurable optical element will affect the transmittance of light from any two points differently, even when those points are close together. By analysing measurements taken over many configurations, information can be extracted about individual points at separations less than that corresponding to a single pixel of the configurable optical element.

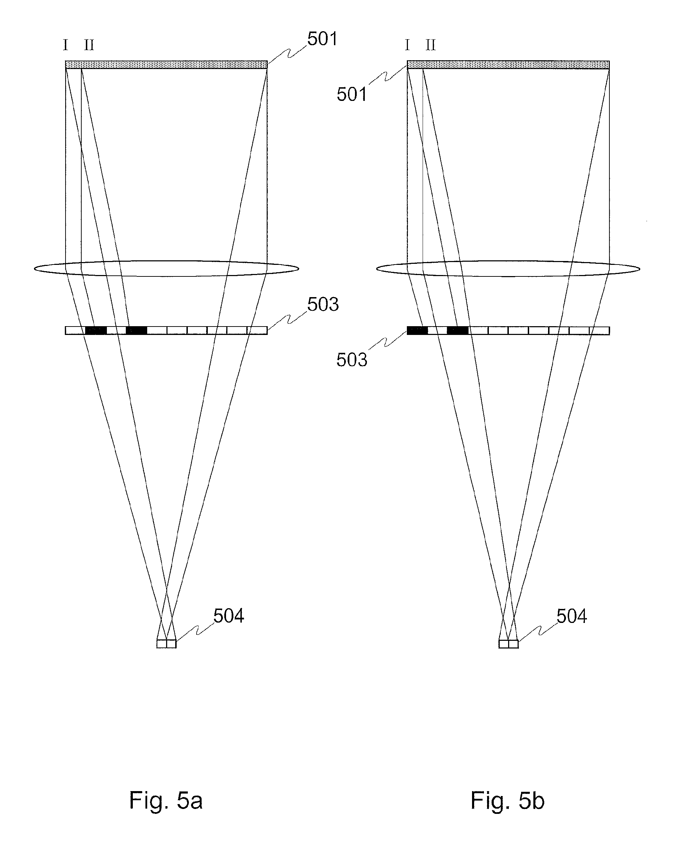

This is clearly illustrated in Figs. 5a and 5b, which schematically illustrate how different configurations of the configurable optical element may differently effect the transmittance of light from two closely adjacent points. Specifically, in Fig. 5a, a configuration of the configurable optical element 503 is shown in which light ways at certain incident angles from point I on the object 501 are transmitted, whereas corresponding rays from point II on the object are blocked. In contrast, for the configuration illustrated in Fig. 5b, the same light rays from point I are blocked, whilst the corresponding rays from point II are transmitted. Therefore, different portions of the light from each of points I and II will be transmitted for each configuration of the configurable optical element 503. As the portion of light transmitted for each point on the object depends not only on a location of that point, but also on the incident angle of light, a signal recorded by the sensor 504 contains information from both the Fourier and image domains.

As shown in Fig. 2, the sensor comprises a plurality of pixels and is positioned at the focal plane, which allows measurements to be taken at various points in the spatial frequency (Fourier) domain and hence allows the Fourier information contained in the signal to be extracted.

The present invention therefore allows an image to be reconstructed with a higher resolution than that of the configurable optical element itself, by placing the configurable optical element away from the focal plane. Since a signal recorded by the sensor contains information from both Fourier and image domains, a higher resolution is obtainable than if only information from the image domain is recorded (cf. prior art, Fig. 1).

Additionally, in some cases, there may be relative movement of the imaging system and object whilst measurements are being recorded for different configurations of the configurable element. In order to avoid this relative movement degrading the resolution of the final reconstructed image, the reconstruction algorithm may be adapted to take such movement into account by modelling it as a constant velocity rotation and translation. Degradation of the final reconstructed image can therefore be avoided. Similarly, such an adapted algorithm may allow use of a simplified configurable element, by using a fixed (or lower-resolution) element in combination with a controlled rotation or translation of the imaging system so as to increase the number of transfer functions available. The adapted algorithm may then take this controlled rotation or translation into account when reconstructing an image.

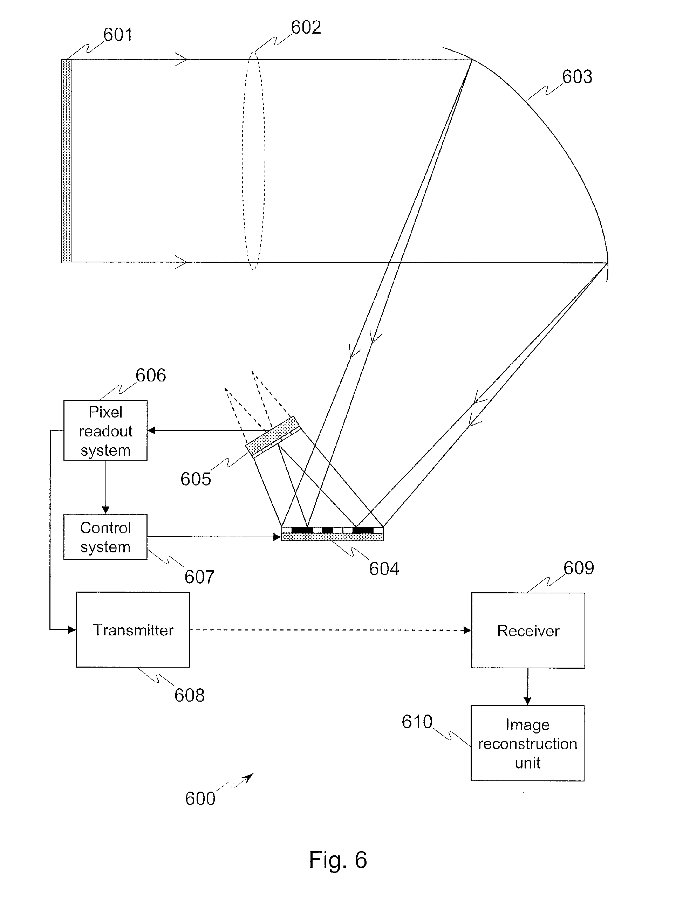

Referring now to Fig. 6, an alternative image capture system 600 is illustrated according to the present invention. The system is similar to that shown in Fig. 2, but utilises reflected rather than transmitted light. Specifically, light from an object 601 passes through an aperture 602 and is focussed by a concave mirror 603 onto a sensor 605, via an LCD reflector 604. The remaining components, specifically the pixel readout system 606, control system 607, transmitter 608, receiver 609 and image reconstruction unit 610 function in a similar manner to the corresponding components of Fig. 2.

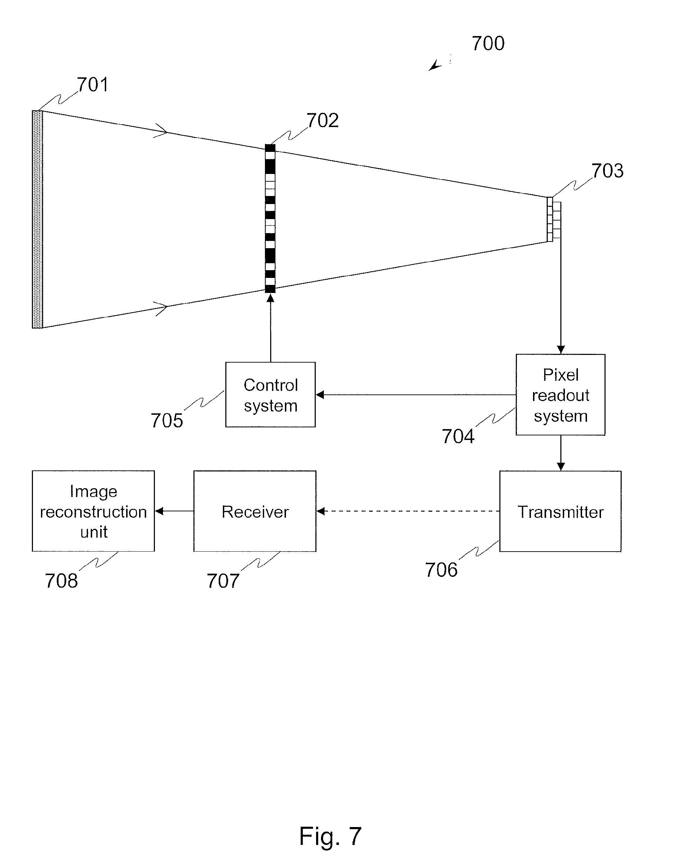

Referring now to Fig. 7, another alternative image capture system 700 is illustrated according to the present invention. In the present example, the image capture system 700 is provided with a sensor comprising a phased array detector 703 for detecting radio-wavelength electromagnetic waves. As a phased array is capable of imaging directly in the Fourier domain, no focussing element (i.e. lens or mirror) is required, and the construction of the image capture system 700 may accordingly be simplified. The configurable element 702 comprises an array of switchable antenna reflectors, each of which can be independently switched by application of a control voltage so as to either transmit or reflect an incident radio wave. Such an electrically controllable antenna reflector is disclosed, for example, in US 5,670,959.

In the above-described radio-frequency embodiment, use of a configurable element according to the present invention allows an image to be reconstructed with a resolution which is greater than that of either the phased array or the configurable element.

While certain embodiments of the invention have been described above, it would be clear to the skilled person that many variations and modifications are possible while still falling within the scope of the invention as defined by the claims.

For example, embodiments of the present invention have been described in relation to imaging visible light and radio waves, but the present invention is equally applicable to imaging at other wavelengths such as gamma-ray, X-ray, UV or infra-red wavelengths. Furthermore, the super-resolution effect achieved by the present invention may be particularly advantageous in applications such as gamma-ray, X-ray, UV or infra-red imaging, where technological constraints mean that sensors are currently only available as low-resolution pixel arrays.

The present invention may be suitable for a wide variety of applications, including but not limited to, space-based satellite imaging systems (e.g. space-based telescopes) or radar imaging systems. However, the present invention is not limited to space-based applications, but may also be used for ground-based imaging applications. As the present invention allows high-resolution imaging whilst using compressive sensing to reduce the volume of data captured during imaging, an imaging system according to the present invention may be particularly suitable for use when a limited power supply is available.

Furthermore, in the described embodiments an image reconstruction unit is provided remote from the sensor and configurable element apparatus, with pixel values transmitted via a transmitter and receiver. However, the skilled person will appreciate that in alternative embodiments, the transmitter and receiver may be omitted, with a direct physical connection being provided between the image reconstruction unit and the pixel readout system.

## Claims

1. Apparatus comprising:
a sensor 204 for detecting electromagnetic radiation from an object 201;
focussing means 202 arranged to focus said electromagnetic radiation onto the sensor; and
a configurable element 203 disposed between the focussing means and the sensor, the configurable element being switchable between a plurality of configurations, each configuration providing a different transfer function between the object and the sensor.

2. The apparatus according to claim 1, wherein the sensor comprises a plurality of pixels.

3. The apparatus according to claim 2, further comprising:
a pixel readout system 205 arranged to record a plurality of pixel values by controlling the configurable element to switch between said plurality of configurations and reading pixel values from the sensor for each one of said plurality of configurations.

4. The apparatus according to claim 3, further comprising a control system 206 connected to the pixel readout system and the configurable element, wherein the pixel readout system is arranged to use the control system to control the configurable element.

5. The apparatus according to claim 3 or 4, further comprising a transmitter 207 for transmitting the plurality of pixel values recorded by the pixel readout system to a remote image reconstruction unit 209.

6. The apparatus according to claim 5, wherein the remote image reconstruction unit 209 is arranged to reconstruct an image of the object by analysing the plurality of pixel values in conjunction with information about the plurality of configurations of the configurable optical element.

7. The apparatus according to any preceding claim, wherein the configurable element comprises a plurality of sub-elements, each sub-element being switchable between a first state in which incident electromagnetic radiation is transmitted to the sensor and a second state in which incident electromagnetic radiation is blocked from entering the sensor,
wherein switching the configurable element between different configurations comprises switching selected ones of the sub-elements between the first state and the second state.

8. The apparatus according to any preceding claim, wherein the configurable element comprises one of a liquid crystal dot matrix array, a digital micromirror device, or an LCD reflector.

9. The apparatus according to any preceding claim, wherein the focussing means comprises one of a convergent lens or a concave mirror.

10. The apparatus according to any one of claims 1 to 7, wherein the electromagnetic radiation has a wavelength corresponding to one of visible, x-ray, gamma-ray, UV, infra-red or radio wavelengths.

11. An image capture system comprising the apparatus according to any one of the preceding claims.

12. Apparatus comprising:
a sensor comprising a phased array of detectors for detecting electromagnetic radiation from an object; and
a configurable element arranged to be switchable between a plurality of configurations, each configuration providing a different transfer function between the object and the sensor.

13. The apparatus according to claim 12, wherein the sensor is arranged to detect said electromagnetic radiation in the Fourier domain.

14. The apparatus according to claim 12 or 13, wherein the electromagnetic radiation comprises radio-frequency electromagnetic radiation, the sensor comprises a phased array of antennas, and the configurable element comprises an array of independently switchable antenna reflectors.

15. A method of detecting electromagnetic radiation from an object, the method comprising:
switching a configurable element between a plurality of configurations so as to provide a plurality of different transfer functions between the object and a sensor, each different transfer function comprising information about Fourier and image components of said electromagnetic radiation, the configurable element being disposed between the object and the sensor; and
detecting said electromagnetic radiation at the sensor.
